# EUROPÄISCHE PATENTSCHRIFT

(11) **EP 1 944 150 B1**
(45) Veröffentlichungstag und Bekanntmachung des Hinweises auf die Patenterteilung: **27.03.2013**
(21) Anmeldenummer: 07100390.9
(22) Anmeldetag: 11.01.2007
(51) Int. Cl.: B29C 49/42, B24C 1/06, B29C 33/42

(54) **Saugblasformwerkzeug zum Herstellen von extrusions-saugblasgeformten Kunststoff-Formteilen, Herstellungsverfahren und Verwendung**
Suction blow moulding tool for manufacturing extruded plastic vacuum and blow moulded parts, manufacturing method and the use
Outil de formage par aspiration et par soufflage destiné à la fabrication de pièces moulées en plastique formées par aspiration et par soufflage à extrusion, procédé pour manufacturer l'outil et utilisage

(43) Veröffentlichungstag der Anmeldung: 16.07.2008
(73) Patentinhaber: EMS-CHEMIE AG, 7013 Domat-Ems (CH)
(72) Erfinder: Caviezel, Heinz, 7000 Chur (CH); Hirt, Martin, 6313 Menzingen (CH); Kettl, Ralph, 7417 Paspels (CH)
(74) Vertreter: OK pat AG

(56) Entgegenhaltungen:
- EP-A- 1 040 904
- EP-A1- 0 796 715
- WO-A-2004/054782
- JP-A- 8 057 943
- US-A- 5 705 254
- M PRYSTAY AND A GARCIA-REJON: "Application of the thermography for the optimization of the blow moulding process" [Online] 1996, INDUSTRIAL MATERIALS INSTITUTE - NATIONAL RESEARCH COUNCIL CANADA , 75 DE MORTAGNE, BOUCHERVILLE, QUEBEC CANADA J4B 6Y4 , XP002440336 Gefunden im Internet: URL:http://www.knovel.com/knovel2/databook /pdf/902/F48E23462CD6744F9595379EEBAD5BB.p df> [gefunden am 2007-06-29] * das ganze Dokument *
- DATABASE WPI Week 200424, Derwent Publications Ltd., London, GB; AN 2004-250090 & JP 2003 320537 A (TOYO SEIKAN KAISHA LTD) 11 November 2003
- DATABASE WPI Week 200946, Derwent Publications Ltd., London, GB; AN 2009-L30721 & JP 2009 149008 A (NIPPON POLYETHYLENE KK) 09 Juli 2009

## Beschreibung

Die Erfindung betrifft ein Saugblasformwerkzeug mit einer Kavität zum Herstellen von extrusions-saugblasgeformten Kunststoff-Formteilen mittels dem Saugblasverfahren, bei welchem ein extrudierter, plastisch verformbarerer Vorformling in Form eines Kunststoffschmelze-Schlauchs in die geschlossene Kavität hinein und in der Kavität zumindest teilweise auf einer Formoberfläche gleitend in Position gebracht wird. Die Erfindung betrifft zudem ein Verfahren zur Herstellung eines solchen Saugblasformwerkzeugs, die Verwendung desselben zum Herstellen von extrusions-saugblasgeformten Kunststoff-Formteilen sowie entsprechende extrusions-saugblasgeformte Kunststoff-Formteile.

Hohlkörper aus thermoplastischen Kunststoffen werden heute überwiegend im Extrusionsblasformverfahren sowie im artverwandten Streckblasverfahren hergestellt [vgl. "Einführung in die Kunststoffverarbeitung" von Prof. Dr. Walter Michaeli, 4. Auflage, 1999 erschienen im Carl Hanser Verlag, München, Wien, Seiten 101-108]. Die Bezeichnung Hohlkörper beschränkt sich dabei nicht nur auf Verpackungsartikel, wie Flaschen, Kanister, oder Fässer, sondern umfasst auch technische Teile, wie z.B. Lüftungskanäle, Surfbretter, Kofferhalbschalen, Dachgepäckträger oder KFZ-Benzintanks, mit einem Rauminhalt von wenigen Millilitern (Arzneimittelverpackungen) bis zu ca. 13'000 Litern (Heizöltank). Der prinzipielle Verfahrensablauf beim normalen Extrusionsblasformen funktioniert wie folgt: Zuerst wird aus einer Kunststoff-Formmasse ein Schlauch (Vorformling) mit der notwendigen Länge extrudiert. Dann schliesst sich das zumeist zweiteilige, bevorzugt aus Aluminium hergestellte Blasformwerkzeug um den schmelzeförmigen, plastisch deformierbaren Extrusionsschlauch, welcher sodann durch ein Messer bei der Extrusionsdüse abgetrennt wird. Das geschlossene Blasformwerkzeug mit dem abgetrennten und an den beiden Enden durch die Quetschkanten des Werkzeugs verschlossenen Schmelzeschlauch wird zur Blasstation bewegt, wo ein Blasdorn in das Blasformwerkzeug eintaucht und Druckluft in den Hohlraum des Vorformlings eingeleitet wird, so dass dieser in die endgültige Form aufgeblasen wird und die Kontur der Innenform des Werkzeugs annimmt. Nach Ablauf der Kühlzeit wird die Blasform geöffnet und der fertige Kunststoffartikel entformt. Die Entformung und das Abtrennen der Butzen, also der überschüssigen Materialränder, die beim Schliessen der Blasform an den Quetschkanten oben und unten entstehen, erfolgt in der Regel automatisch. Je nach Gestalt des Kunststoff-Formteils können Butzen anfallen, deren Gesamtgewicht von wenigen Prozenten bis zum Mehrfachen des Formteilgewichts beträgt. Diese Butzen müssen möglichst sofort Schneidmühlen zugeführt werden, um sie dann als sogenanntes Regenerat wieder dem Extruder zuführen zu können.

Die Herstellung gekrümmter, dreidimensional ausgerichteter Teile mit partiell unterschiedlichen Beanspruchungs- und Funktionskriterien ist im herkömmlichen Extrusionsblasformverfahren nur bedingt möglich. Überquetschungen in den (gekrümmten) Formtrennnahtbereichen führen zu hohen Scrapanteilen (Butzenanteilen) insbesondere in den gequetschten Längsbereichen (d.h. nicht nur oben und unten). Überquetschungen führen zudem (nicht zuletzt durch die Längsnähte in der Wand der Teile) zu Funktionseinschränkungen durch gravierende Ungleichmässigkeiten in der Wanddickenverteilung und damit verbundenen Schwachstellen [vgl. Bild 1 des Fachartikels "Abfallarmes Blasformen komplexer Formteile" von E. Renford-Sasse, Kunststoffe 1993/9, Carl Hanser Verlag, München; sowie "Trends in der Blasform-Technologie", Fachtagung des Süddeutschen Kunststoff-Zentrums vom 21. Juni 1994, Vortrag von Herrn Dipl.-Ing. W. Daubenbüchel: Verfahrens- und Maschinentechnik der 3D-Technologie]. Für die Herstellung quetschnahtfreier, mehrdimensional (3D) gekrümmter Produkte werden im zitierten Vortrag in Weiterentwicklung des herkömmlichen Extrusionsblasformens mehrere Lösungswege genannt:
a) Schlauchextrusion und Ablegen des Vorformlings entsprechend der Artikelkontur in eine geöffnete Blasformhälfte,
b) Manipulation des Vorformlings mittels Greiferelementen, Vakuum und/oder Luftduschen, und
c) eine Kombination der Wege a) und b), sowie
d) Saugblasformen (vgl. Seite 71 der Vortragsunterlagen, mit dem Basispatent US 4,645,447 der Firma Sumitomo).

Die weiterentwickelten Verfahrensvarianten werden nicht nur bei der Herstellung von Rohren oder Hohlkörpern aus einem einzigen Kunststoffmaterial angewandt, sondern oft auch in Verbindung mit der sequentiellen Coextrusion. Die sequentielle Coextrusion kombiniert unterschiedliche Materialien in der Längsrichtung bei der Vorformlingherstellung. Dabei werden Materialien mit unterschiedlichen Eigenschaften in Bezug auf Flexibilität, Stabilität, Festigkeit und Wärmformbeständigkeit kombiniert. In einfachster Anwendung ist es eine Kombination aus zwei Materialien mit unterschiedlicher Härte. So werden z.B. Basisteile mit flexiblen Endzonen und weniger flexiblem Mitteteil in einem Arbeitsgang hergestellt (Weich - Hart - Weich). Insbesondere Luftansaugrohre oder Lüftungsrohre verlangen derartige Kombinationen, damit eine gute Montage und Abdichtung der Endzonen durch Klemmschellen und eine ausreichende Stabilität im Mittelbereich (gegen Unter- bzw. Überdruck, je nach Anwendungsfall) gewährleistet ist. Bevorzugte Materialkombinationen für Hart/Weich-Formteile sind Polypropylen und EPDM, Polyamid mit elastomermodifiziertem Polyamid, sowie Polybutylenterephthalat mit elastomermodifiziertem Polyester. Beide Blasformtechniken "quetschnahtfreies Blasformen und sequentielle Coextrusion, meist in Kombination" eignen sich somit insbesondere zum Herstellen von Formteilen, die bisher aus Gummiwerkstoffen gefertigt wurden. Im Vergleich zu Gummiwerkstoffen sind bei der Anwendung von TPE-Materialien wesentlich kürzere Zykluszeiten realisierbar. Typische Anwendungsfälle sind vor allem Teile für den Automobil- und Maschinenbau, wie Achsmanschetten, Ansaugschläuche, Ansaugkrümmer, Lenkmanschetten, Reinluftschläuche, Stossdämpfer, Verbindungsrohre, Warmluftschläuche usw. Mittels Saugblasformen können mehrdimensional gekrümmte Kunststoff-Formteile, wie längliche, mehrfach gewundene Luftführungsrohre für den Motorenraum von Automobilen ohne Quetschnaht hergestellt werden (vgl. US 4,645,447). Weitere Beispiele für extrusionsblasgeformte bzw. saugblasgeformte Teile sind dem Fachmann bekannt aus folgenden Patentschriften: EP 0 659 534 B1 (sequentielle Coextrusion bei einer mehrschichtigen Kühlflüssigkeitsleitung), EP 0 659 535 B1 (Extrusionsblasformen einer mehrschichtigen Kühlflüssigkeitsleitung mit variierendem Schichtdickenverhältnis, kombiniert mit 3D-Schlauchmanipulation), EP 0 863 351 B1 (spezielle Wellrohrgeometrie für Fluidleitungen).

Beim Saugblasverfahren wird der Vorformlingschlauch während seiner Extrusion durch das darunter befindliche, geschlossene Blasformwerkzeug gesaugt. Das Blasformwerkzeug selbst umfasst den Hauptteil (bestehend aus zwei Hälften) mit der Formkavität sowie Schieberelemente, die unabhängig voneinander, vorzugsweise hydraulisch, betätigt werden und die Kavität an der Ober- und Unterseite schliessen können. Vorzugsweise an der Werkzeugunterseite ist eine Saugvorrichtung angebracht [vgl. "Blasformbare Polyamide", W. Pfleger et al., Kunststoffe 86 (1996) 1, Seiten 61-65 (insbesondere Bild 6), Carl Hanser Verlag, München]. Das Saugblasverfahren erlaubt (wie auch die Schlauchmanipulation) die Verarbeitung aller im Extrusionsblasformen üblichen Werkstoffe. Dies umfasst alle thermoplastisch verarbeitbaren Formmassen, bzw. als deren Matrix Polymere wie z.B. Polyolefine, aber auch Polyamide und thermoplastische Elastomere auf Polypropylen-, Polyester- oder Polyamidbasis. Auch komplexe Geometrien sind herstellbar, wohingegen enge Kurvenradien beim Saugblasverfahren zu Problemen, wie z.B. Anhängen des Vorformlings an Oberflächen der Blasform, führen können. Das Saugblasverfahren weist im Vergleich zu anderen 3D-Verfahren [wie z.B. beschrieben in "Abfallarmes Blasformen komplexer Formteile" von E. Renford-Sasse, Kunststoffe 1993/9, Carl Hanser Verlag, München] folgende Vorteile auf:
- es entstehen geringere Investitionskosten für Maschine und Werkzeug auch für kleinere Losgrössen,
- die einfach zu handhabende Technologie ohne unerwünschte seitliche Abquetschungen (reduzierter Butzenabfall und kein Auftreten von Schwachstellen in Form einer Quetschnaht) erlaubt den Einsatz von kleineren Extrudern und Aggregaten zur Butzenaufbereitung,
- die bessere Kontrolle der Wanddickenverteilung des Blasformteils ermöglicht eine optimale Materialausnutzung,
- eine Mehrfachfertigung in 3D-Technik von zwei identischen Artikeln in einem Arbeitszyklus auf Maschinen mit Doppelspeicherköpfen ist möglich.

Aus dem Stand der Technik geht somit hervor, dass komplexe Geometrien und insbesondere enge Kurvenradien beim Saugblasformen Probleme geben können. Diese Probleme, die sich vor allem beim Ein- bzw. Durchsaugen des Vorformlings in die Werkzeugkavität dadurch ergeben, dass der Kunststoffschmelzeschlauch an der Formoberfläche zumindest zeitweise kleben bleibt, wurden erkannt. Eine "Luftschmierung" in Form von Druckluftdüsen, die vorzugsweise an den heiklen bzw. exponierten Stellen der Formoberfläche angeordnet werden, an denen dem eingesaugten Vorformling Richtungsänderungen aufgezwungen werden, ist aus US 4,865,799 bzw. aus EP 0 301 694 B2 bekannt. Diese Druckluft reduziert die Reibung zwischen dem extrudierten, plastisch verformbaren Kunststoffschmelzeschlauch und Formoberflächen der geschlossenen Kavität einer Saugblasform beim Einsaugen und Durchsaugen des Kunststoffschmelzeschlauchs. Allerdings verkompliziert das Vorsehen solcher Luftdüsen mit den erforderlichen Anschlüssen und der Druckluftversorgung das Saugblasformwerkzeug erheblich, was die Herstellung der Kunststoff-Formteile erheblich verteuert.

Saugblasformwerkzeuge, Herstellungsverfahren und Verwendungen nach den Oberbegriffen der Ansprüche 1, 7 und 16 werden in WO 2004054782 und EP1040904 offenbart.

Aufgabe der vorliegenden Erfindung ist es, die Reibung zwischen einem extrudierten, plastisch verformbaren Vorformling in Form eines Kunststoffschmelzeschlauchs und Formoberflächen einer geschlossenen Kavität einer Saugblasform beim Ein- und Durchsaugen des Kunststoffschmelzeschlauchs in alternativer Weise zu reduzieren, ohne dass die Herstellungskosten für das Saugblasformwerkzeug erheblich ansteigen.

Die Aufgabe wird mit der in den Ansprüchen 1, 7 und 16 vorgeschlagen Lösung gelöst.

Der Kunststoffschmelzeschlauch bzw. das fertige Kunststoff-Formteil kann dabei aus irgend einer extrusions-saugblasformfähigen Formmasse gebildet sein. Bevorzugt als Matrix für die Formmasse sind Polymere wie z.B. Polyolefine, aber auch Polyamide und thermoplastische Elastomere auf Polypropylen-, Polyester- oder Polyamidbasis. Besonders bevorzugt sind Polyamide und Polyamid-Elastomere und auch Mischungen von Polyamiden und/oder Polyamid-Elastomeren. Diese können die üblichen Additive und Zuschlagstoffe wie z.B. Verstärkungsmittel oder auch viskositätserhöhende Zusätze (für genügend hohe Schmelzefestigkeit) enthalten. Was unter Polyamiden und Polyamid-Elastomeren verstanden wird, braucht hier nicht näher erläutert zu werden, weil dies dem Fachmann bekannt ist, z.B. aus dem Kunststoff-Handbuch 3/4 "Polyamide", herausgegeben von L. Bottenbruch und R. Binsack, Carl Hanser Verlag München Wien 1998 (Polyamid-Elastomere im Kapitel 8). Beispiele für geeignete Extrusionsblasformmassen (bevorzugt auf Basis von Polyamiden) sind zudem auch im Dokument EP 1 394 197 beschrieben.

Für den Spezialfall der sequentiellen Coextrusion werden Kombinationen aus mindestens zwei Formmassen verwendet, die natürlich ausreichende Haftung zueinander aufweisen müssen. Bei den Polymeren für die entsprechenden Matrizes sind dabei z.B. Kombinationen bevorzugt, die aus Polypropylen und EPDM, Polyamid und elastomermodifiziertem Polyamid (Polyamid-Elastomer), sowie aus Polybutylenterephthalat und elastomermodifiziertem Polyester gebildet sind.

Weiterführende und bevorzugte Ausbildungen des erfindungsgemässen Saugblasformwerkzeugs, des Verfahrens zum Herstellen eines alternativen Saugblasformwerkzeugs, der Verwendung eines alternativen Saugblasformwerkzeugs zum Herstellen von extrusions-saugblasgeformten Kunststoff-Formteilen, sowie des alternativen extrusions-saugblasgeformten Kunststoff-Formteils ergeben sich jeweils aus den abhängigen Ansprüchen.

Vorteile der vorliegenden Erfindung umfassen:
- Die Verwendung von Schmiermitteln wie Öl, z.B. Silikonsprays bzw. Silikonöl, wie sie im bisherigen Stand der Technik zum Reduzieren der Reibung zwischen einem extrudierten, plastisch verformbaren Kunststoffschmelzeschlauch und herkömmlichen Formoberflächen einer geschlossenen Kavität einer Saugblasform beim Einsaugen und Durchsaugen des Kunststoffschmelzeschlauchs oft notwendig ist, erschwert oder verunmöglicht ein nachträgliches Verschweissen von Anschlussteilen mit dem Kunststoffbauteil. Die erfindungsgemässe Strukturierung zumindest eines Teils der Formoberfläche der Kavität erlaubt den Verzicht auf solche Schmiermittel, weil die Produktion auch ohne störungsfrei und optimal läuft, selbst mit den bevorzugten Polyamiden und Polyamid-Elastomeren, die an sich im schmelzeförmigen Zustand nicht gut auf metallischen Oberflächen gleiten.
- Die Verwendung des erfindungsgemässen Saugblasformwerkzeugs mit einer Strukturierung der Formoberfläche der Kavität erlaubt das Herstellen von extrusions-saugblasgeformten, kratzfesteren Kunststoff-Formteilen mit gleichmässig matten Oberflächen, d.h. der Abdruck der erfindungsgemässen Strukturierung auf der Oberfläche des Kunststoff-Formteils bringt auch für das Formteil selbst einen Gebrauchsvorteil. Damit kann auf aufwändige Herstellungs- und Veredelungsverfahren zum Erzeugen von fotogenarbten Oberflächen [vgl. "Die strukturierende Formnestoberfläche und deren Abformung durch Thermoplaste" von Dieter Schauf, in "Anwendungstechnische Information ATI 584" der Firma Bayer vom 04.05.1994] verzichtet werden.

Grundlagen und Aspekte der vorliegenden Erfindung sollen nun an Hand von schematischen Zeichnungen und ausgewählten Ausführungsbeispielen näher erläutert werden. Dabei zeigen:
- Fig. 1: einen Schnitt durch ein aus dem Stand der Technik bekanntes Saugblasformwerkzeug , wobei
Fig. 1A das Einbringen des Vorformlings in die Kavität des Werkzeugs mit Saugunterstützung;
Fig. 1B das Abklemmen des Vorformlings und das Verschliessen der Kavität;
Fig. 1C das Blasformen des Kunststoff-Formteils; und
Fig. 1D das Öffnen des Werkzeugs und das Entformen des Kunststoff-Formteils zeigen;
- Fig. 2: eine Statistik über die Butzenlänge (als Mass für die Gleiteigenschaften), die mit unterschiedlichen Formoberflächen (a mit einer herkömmlichen und b mit einer erfinderischen) erzielt wurde;
- Fig. 3: Mikroskopieaufnahmen von erfindungsgemäss bearbeiteten Formoberflächen und entsprechenden Oberflächen von extrusionssaugblasgeformten Kunststoff-Formteilen, wobei
Fig. 3A die Formoberfläche nach dem Strukturieren durch Sandstrahlen mit Quarzsand;
Fig. 3B die Formoberfläche nach dem Verdichten durch Kugelstrahlen mit Glaskugeln; und
Fig. 3C die fertige Oberfläche eines mit dem erfindungsgemässen Saugblasformwerkzeug hergestellten Kunststoff-Formteils zeigt;
- Fig. 4: eine Ansicht eines mittels sequentieller Coextrusion hergestellten Kunststoff-Formteils, welches einen weichen, flexiblen Balg zwischen den zwei harten, stabilen Endteilen umfasst;
- Fig. 5: eine Ansicht eines mittels sequentieller Coextrusion hergestellten Kunststoff-Formteils, welches einen harten, stabilen Mittelteil und an dessen Enden je ein weiches, flexibles Anschlussteil umfasst;
- Fig. 6: eine Ansicht eines mittels sequentieller Coextrusion hergestellten Kunststoff-Formteils, welches einen weichen, flexiblen Balg zwischen den zwei harten, stabilen, mit weichen, flexiblen Anschlussteilen ausgerüsteten Endteilen umfasst.

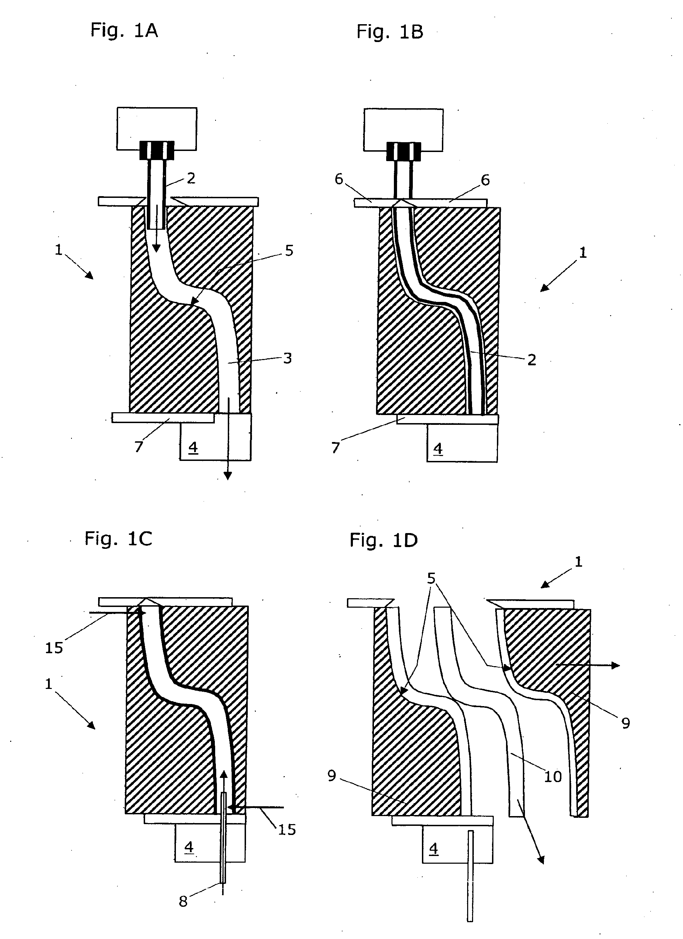

Figur 1 zeigt einen Schnitt durch ein aus dem Stand der Technik bekanntes Saugblasformwerkzeug 1. Das Einbringen des Vorformlings 2 in die Kavität 3 des Werkzeugs 1 (vgl. Fig. 1A) erfolgt vorzugsweise von oben, so dass die auf den Vorformling 2 in Form eines extrudierten, plastisch verformbareren Kunststoffschmelzeschlauchs wirkende Schwerkraft das Einbringen ermöglicht. Besonders bevorzugt ist die Unterstützung dieses Vorgangs, bei dem der Schmelzeschlauch im gewundenen Kanal des geschlossenen Werkzeugs nach unten wandert, mit einer vorzugsweise unter der Blasform 1 angeordneten Saugvorrichtung 4. Der Vorformling 2 gleitet in die geschlossene Kavität 3 hinein und wird in der Kavität zumindest teilweise auf einer Formoberfläche 5 gleitend in Position gebracht. Es ist offensichtlich, dass an den exponierten Stellen der Formoberfläche (hier bezeichnet mit einem Pfeil und dem Bezugszeichen 5) die Tendenz des Kunststoffschmelzeschlauchs 2, an der Formoberfläche anzuhängen, am grössten ist. Aus diesem Grund wurden in US 4,865,799 bzw. EP 0 301 694 B2 gerade an solchen Stellen das Gleiten unterstützende Luftdüsen vorgeschlagen.

Das Abklemmen des Vorformlings 2 und das Verschliessen der Kavität 3 erfolgt vorzugsweise durch einen oberen, zweiteiligen Schieber 6 (vgl. Fig. 1B), währenddem das Verschliessen der Unterseite der Kavität 3 mit einem einteiligen Schieber 7 oder bevorzugt ebenfalls mit einem zweiteiligen Schieber erfolgen kann (vgl. Bild 6 im eingangs zitierten Artikel "Blasformbare Polyamide").

Zum Aufblasen des Kunststoff-Formteils beim Saugblasen wird entweder ein Blasdorn 8 verwendet, oder es werden an den Enden des Schlauchs Blasnadeln 15 von der Seite her eingeführt, die durch in den Formhälften eingebrachte Bohrungen als Kanülen durch die Schlauchwand stechen (vgl. waagrechte Pfeile in Fig. 1C). Die möglichen Varianten (unter anderem auch damit kombinierte Spülluftverfahren zur schnelleren Abkühlung) sind dem Fachmann bekannt. Durch das Einblasen von Druckluft und/oder eines Inertgases mit einigen bar Druck wird der mittels Extrusion vorgeformte Kunststoffschmelzeschlauch im Durchmesser aufgeweitet und gleichmässig auf die Formoberfläche 5 der Kavität 3 gedrückt, bis er die definitive Form des Kunststoff-Formteils 10 angenommen hat.

Nach dem Abkühlen des Kunststoff-Formteils 10 werden die beiden Werkzeughälften 9 voneinander getrennt und das Kunststoff-Formteil entformt (vgl. Fig. 1D). Das Entformen geschieht vorzugsweise mittels (nicht gezeigten) im Werkzeug angebrachten Ausstossern.

Im Folgenden wird nun das erfindungsgemässe Herstellen des Saugblasformwerkzeugs und dessen Verwendung näher erläutert:

Entsprechend der eingangs gestellten Aufgabe könnte man zunächst auch die Überlegung anstellen, ohne Modifikation am Saugblasformwerkzeug eine kleinere Extruderdüse zu verwenden. Dadurch würde der Aussendurchmesser des vorgeformten Kunststoffschmelzeschlauchs reduziert, was möglicherweise auch das unerwünschte Anhängen des Vorformlings 2 an der Formoberfläche 5 der Kavität 3 und damit auch ein unkontrolliertes Auslängen des Vorformlings 2 reduzieren würde. Die ebenso unerwünschte Tendenz des Kunststoffschmelzeschlauches, in seinem Inneren zu verkleben (aufgrund des entsprechend kleineren Innendurchmessers des Schlauchs), würde jedoch verstärkt. Deshalb bestand das klare Ziel darin, einen Kunststoffschmelzeschlauch mit einem möglichst grossen Durchmesser in die Kavität 3 des Werkzeuges 1 zu bringen und dort mittels Durchsaugen ohne Beeinträchtigung und reproduzierbar für das Blasformen zu positionieren.

Eine weitere, an sich bekannte Lösung der eingangs formulierten Aufgabe bestünde darin, einen Silikonspray bzw. Silikonöl auf die Formoberfläche 5 aufzubringen und so die Reibung zwischen einem extrudierten, plastisch verformbaren Kunststoffschmelzeschlauch 2 und diesen Formoberflächen 5 einer geschlossenen Kavität 3 der Saugblasform 1 beim Ein- und Durchsaugen zu reduzieren. Es ist jedoch bekannt, dass die Verwendung von solchen Schmiermitteln (ganz abgesehen von den schmierigen Arbeitsbedingungen) ein nachträgliches Verschweissen von Anschlussteilen mit dem Kunststoffbauteil erschwert oder verunmöglicht. Auf ein unbedingt notwendiges Verwenden von Schmiermitteln sollte deshalb verzichtet werden. Die erfinderische Idee war es in der Folge, bei der Oberfläche des Saugblasformwerkzeuges anzusetzen.

Verwendet wurden für die Versuche hochviskose Polyamid- und Polyamid-Elastomer-Formmassen, wie sie von der aktuellen Anmelderin für den Einsatz im Bereich medienführender Systeme hergestellt und vertrieben werden. Insbesondere für Luftführungsteile im Motorraum von Automobilen werden hohe Anforderungen in Bezug auf eine hohe Festigkeit, Steifigkeit und Wärmeformbeständigkeit gestellt. Diese Anforderungen werden durch Polyamide, wie beispielsweise Grilon^{®} R 50 HNZ, Grilon^{®} RVZ-15H und Grilon^{®} ELX 40 HNZ (letzteres ist ein Polyamid-Elastomer) erfüllt (Grilon^{®} ist eine eingetragene Handelsmarke der EMS-CHEMIE AG). Diese Werkstoffe bieten eine hohe Konstanz bezüglich der Schlauchstandfestigkeit und der Verarbeitbarkeit, so dass sie für den Einsatz in der 3D-Technologie mittels Saugblasformen bestens geeignet sind.

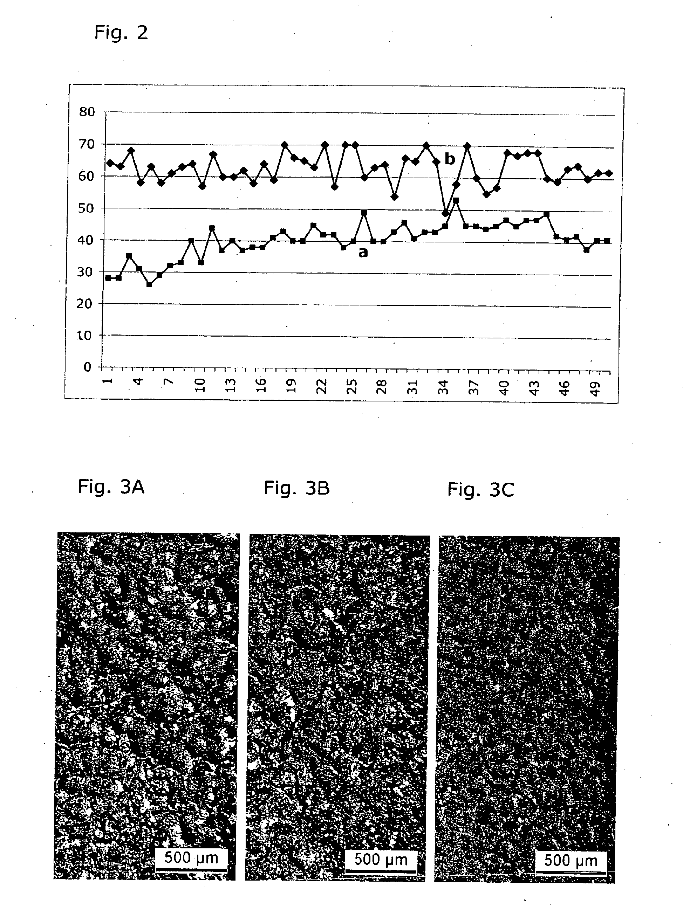

Sämtliche Versuche wurden mit einer handelsüblichen Extrusionssaugblasformanlage ausgeführt, und unterschiedliche Formoberflächen 5 wurden auf ihre Eignung untersucht. Dabei wurde in Kleinserien von 50 Mustern der Ausschussanteil sowie die anfallende Butzenlänge, also der unten jeweils heraustretende Butzen gemessen (Darstellung in Fig. 2, Erläuterungen dazu weiter unten) und die Reproduzierbarkeit dieser Resultate beurteilt. In diesem Zusammenhang wurde der Butzen nicht als Abfall, sondern als Mass für die Güte der Gleiteigenschaften betrachtet, weil bei gleicher jeweils extrudierter Menge der Schlauch etwas länger wird, wenn er einwandfrei durch die Kavität gleitet.

Als erstes wurde eine Kavität 3 mit glattgefräster Formoberfläche 5 verwendet, um schlauchförmige Vorformlinge 2 mit einer Massetemperatur von ca. 230-240°C herzustellen. Weil der damit erzielte Ausschuss von 70% trotz einer von 380 1/min auf 500 1/min erhöhten Saugleistung der Saugvorrichtung 4 nicht wesentlich reduziert werden konnte, wurde beschlossen, die Formoberfläche 5 mit Glasperlen zu überarbeiten. Mit diesen mit Glasperlen kugelgestrahlten Formoberflächen 5 konnte der Ausschuss eliminiert werden, allerdings wurden sehr starke Schwankungen der Butzenlänge gemessen.

Parallel zu diesen Versuchen wurden Topochrom^{®}-Beschichtungen untersucht. Diese ergaben unkonstante Butzenlängen, wobei der Ausschuss mit zunehmender Feinheit der Topochrom^{®}-Oberfläche zunahm und maximal etwa 66% betrug. Die hohen Investitionskosten und das aufwändige Herstellungsverfahren stehen der routinemässigen Nutzung dieser Beschichtungen ebenfalls entgegen.

Überraschenderweise stellten sich die besten Resultate heraus, nachdem eine gefräste Formoberfläche 5 einer kombinierten Behandlung mit Sandstrahlen und anschliessendem Kugelstrahlen unterworfen wurde.

Figur 2 zeigt eine Gegenüberstellung der erzielten Resultate in Form eines Diagramms: Die nach einem Trocknen (über Nacht bei 80 °C) gemessene Butzenlänge ist auf der Ordinate (in mm) und die Nummer der jeweils 50 Muster ist auf der Abszisse eingetragen. Abweichend von der üblichen Betrachtungsweise, dass in einer kommerziellen Produktion eine möglichst kurze Butzenlänge erzielt bzw. eingestellt werden soll (um keine unnötigen Materialabfälle zu verursachen), liegt diesem Test die Annahme zu Grunde, dass bei gleicher Extrusionsmasse eine grössere, jenseits der Saugblasform austretende Butzenlänge anzeigt, dass die Saugblasform reibungsarmer durchquert und gleichmässiger belegt wurde. Somit stellen hier unter den Testbedingungen grössere Butzenlängen die besseren Resultate dar. Zusätzlich ist eine möglichst hohe Reproduzierbarkeit der Butzenlänge, also eine geringe Standardabweichung derselben erstrebenswert. Der mit einer glattgefrästen Formoberfläche 5 (vgl. a) erreichte Mittelwert (arithmetisches Mittel) der Butzenlängen betrug 40.44 mm. Dagegen waren die Butzen aus der mit Sand- und Kugelstrahlen behandelten, erfindungsgemässen Formoberfläche 5 (vgl. b) bedeutend länger und beliefen sich im Mittel auf 62.74 mm. Auch die aus den 50 Mustern jeweils errechneten Standardabweichungen deuten klar darauf hin, dass die kombinierte Strahlbehandlung (Standardabweichung von b = 4.73 mm) deutlich reproduzierbarere Butzenlängen ermöglichte als die glattgefräste Formoberfläche 5 (Standardabweichung von a = 5.80 mm).

Das erfindungsgemässe Verfahren zum Bearbeiten der Kavität 3 eines Saugblasformwerkzeugs 1 für das Herstellen von extrusions-saugblasgeformten Kunststoff-Formteilen mittels dem Saugblasverfahren umfasst folgende Arbeitsschritte:
A) Sandstrahlen der gefrästen Formoberfläche 5 mit Quarzsand mit einer Partikelgrösse von 0.2 bis 2 mm. Der Quarzsand wurde dabei mit einem Luftdruck (Überdruck) von 2-8 bar während einer Zeit von 0.5-5 Minuten auf die Formoberfläche geblasen. Speziell gute Resultate wurden mit Quarzsand erhalten, dessen Partikelgrösse 0.7 bis 1 mm betrug und der mit einem Luftdruck von 4 bar während einer Zeit von 2 Minuten auf die Formoberfläche geblasen wurde.
B) Sandstrahlen der gefrästen Formoberfläche 5 mit Meersand. Der Meersand wurde dabei mit einem Luftdruck von 2-8 bar während einer Zeit von 0.5-5 Minuten auf die Formoberfläche geblasen. Speziell gute Resultate wurden mit Meersand erhalten, dessen Partikelgrösse 0.7 bis 1 mm betrug und der mit einem Luftdruck von 4 bar während einer Zeit von 2 Minuten auf die Formoberfläche geblasen wurde.
C) Kugelstrahlen der gefrästen Formoberfläche 5 mit Glasperlen mit einem Durchmesser von 100 bis 1000 µm (entspricht 0.1 bis 1 mm). Die Glasperlen wurden dabei mit einem Luftdruck von 2-8 bar während einer Zeit von 0.5-5 Minuten auf die Formoberfläche geblasen. Speziell gute Resultate wurden mit Glasperlen erhalten, deren Durchmesser ca. 500 µm (0.5 mm) betrug und die mit einem Luftdruck von 4 bar während einer Zeit von 2 Minuten auf die Formoberfläche 5 geblasen wurden.

Die Figur 3 zeigt Mikroskopieaufnahmen der erfindungsgemäss bearbeiteten Formoberflächen 5 der Kavität 3 eines Saugblasformwerkzeugs 1 für das Herstellen von extrusions-saugblasgeformten Kunststoff-Formteilen mittels dem Saugblasverfahren bzw. von der Oberfläche von derartigen Formteilen. Der aktuelle Vergrösserungsfaktor beträgt jeweils ca. 36 x, wie aus dem 500 µm entsprechenden Balken ersichtlich ist.

Die Figur 3A ist eine mikroskopische Abbildung der Formoberfläche 5 eines erfindungsgemässen Saugblasformwerkzeugs 1 nach dem Sandstrahlen mit Quarzsand mit einer Körnung von 0.7-1.0 mm. Deutlich sind die zerklüfteten Strukturen auf dieser Formoberfläche 5 abgebildet. Allfällige Spitzen dieser Strukturen wurden nachträglich durch Sandstrahlen mit Meersand weggenommen.

Die Figur 3B zeigt die Formoberfläche 5 des Saugblaswerkzeugs 1, nachdem diese nach dem Sandstrahlen mit Glaskugeln mit einem Durchmesser von 500 µm kugelgestrahlt und damit leicht verdichtet worden war. Diese mikroskopische Abbildung zeigt somit den Endzustand der erfindungsgemäss bearbeiteten Formoberfläche 5. Diese Strukturierung der Formoberfläche verringert einerseits die mögliche Kontaktfläche mit dem durchzusaugenden Kunststoffschmelzeschlauch 2. Andererseits ist anzunehmen, dass durch das Einsaugen des Vorformlings 2 in die Kavität 3 an diesen Oberflächenstrukturen der Kavität 3 Luftwirbel erzeugt werden, welche eine die Gleitreibung des Kunststoffschmelzeschlauchs (Vorformlings) erniedrigende "gasförmige Schmierschicht" bereitstellen.

Die Figur 3C zeigt die fertige Oberfläche eines mit dem erfindungsgemässen Saugblaswerkzeug 1 hergestellten Kunststoff-Formteils. Die raue, aber doch recht gleichmässig strukturierte Oberfläche (d.h. der Abdruck der erfindungsgemässen Strukturierung) erscheint matt und verleiht dem Kunststoff-Formteil ein edles Aussehen, welches dank der erhöhten Kratzfestigkeit auch lange erhalten bleibt.

Die Formoberfläche 5 des erfindungsgemässen Saugblaswerkzeugs 1 lässt sich durch unterschiedliche Kenngrössen charakterisieren. Zu diesen Kenngrössen gehören die Rauheitswerte Rₐ und R_{z}. Bei der vorliegenden Erfindung wurden diese beiden Rauheitskenngrössen so gemessen und angegeben, wie sie definiert und erläutert sind im "Dubbel" Taschenbuch für den Maschinenbau, herausgegeben von W. Beitz und K.-H. Grote, 20. Auflage, Springer-Verlag Berlin Heidelberg New York 2001, Seiten F30 bis F32. Gemäss Seite F31 (linke Spalte) ist Rₐ der arithmetische Mittelwert aller absoluten Profilabweichungen nach oben und unten (von der Mittellinie auf mittlerer Höhe aus gerechnet) innerhalb einer gemessenen Bezugsstrecke auf der Oberfläche des untersuchten Körpers. Gemäss Seite F31 (rechte Spalte) ist der Rautiefenwert R_{z} ein Mass für die grössten vorkommenden Profilabweichungen. Verwendet wurde die Definition vom zweiten Absatz in der rechten Spalte von Seite F31, die sich auf die DIN 4768 beruft. Demnach ist R_{z} der Mittelwert der Einzelrautiefen von insgesamt fünf Bezugsmessstrecken.

Zur Veranschaulichung der Grössenordnungen bzw. zu Vergleichszwecken wird die folgende, aus der spanabhebenden Fertigung bekannte Tabelle verwendet.

**Tabelle 1: Vergleich von Rauigkeitswerten**

| | | | | | | | | | | | |
|---|---|---|---|---|---|---|---|---|---|---|---|
| DIN ISO 1302 | Rauwert Rₐ [µm] | 0.025 | 0.05 | 0.1 | 0.2 | 0.4 | 0.8 | 1.6 | 3.2 | 6.3 | 12.5 |
| | Rauheitsklasse | N1 | N2 | N3 | N4 | N5 | N6 | N7 | N8 | N9 | N10 |
| Beiblatt 1 zu DIN 4768/1 | Rautiefe R_{z} [µm] | 0.1 bis 0.8 | 0.25 bis 1.6 | 0.4 bis 2.5 | 0.8 bis 4 | 1.6 bis 6.3 | 3.15 bis 12.5 | 6.3 bis 20 | 12.5 bis 31.5 | 25 bis 63 | 40 bis 100 |

| | | | | | | | | | | | |
|---|---|---|---|---|---|---|---|---|---|---|---|
| (adaptiert aus dem FLENDER-Taschenbuch, 3. Auflage Juli 2000, © by FLENDER AG, Bocholt, Deutschland) | | | | | | | | | | | |

In dieser Tabelle sind auch die entsprechenden N-Klassen eingetragen, wie diese vor allem in der Schweiz und in den USA Anwendung finden. Aus den durchgeführten Messungen bzw. aus den von den Mikroskopieabbildungen abgeleiteten Abschätzungen ergibt sich für die erfindungsgemässe Oberfläche des Saugblasformwerkzeugs ein bevorzugter Bereich für den Rₐ-Wert zwischen 0.8 und 6.3 µm. Dieser entspricht einem demzufolge ebenfalls bevorzugten R_{z}-Wert im Bereich von 6 bis 40 µm bzw. einer der Rauheitsklassen N6 bis N9. Ganz speziell bevorzugt ist eine Strukturierung der Formoberfläche mit einem Rₐ-Wert von ca. 3 µm und einem R_{z}-Wert im Bereich von 20 µm. Diese Werte entsprechen der Rauheitsklasse N8.

Es wurde des weiteren beobachtet, dass ein Kühlen bzw. Temperieren der Saugblasform die Gleitreibung zusätzlich verringert und damit die erhältlichen Resultate noch verbessert. Vorzugsweise ist deshalb ein erfindungsgemässes Saugblasformwerkzeug kühlbar ausgebildet. Dabei ist zumindest die Formoberfläche vorzugsweise aus Aluminium ausgebildet. Bevorzugt wird das Saugblasformwerkzeug auf eine Temperatur im Bereich von 20 bis 120 °C temperiert; besonders bevorzugt ist eine Temperatur im Bereich von 60 bis 80 °C.

Vorzugsweise werden alle Formoberflächen 5 mit einer erfindungsgemässen Oberflächenstrukturierung versehen. Dadurch wird ein einheitlicher optischer Aspekt der Oberfläche des Kunststoff-Formteils erzeugt. Es ist aber auch möglich, nur bestimmte, ausgewählte Teile der Formoberflächen 5 zu behandeln. Dies kann dann angebracht sein, wenn weiche, flexible Teile eine dichtende Funktion erfüllen müssen oder wenn der optische Aspekt vernachlässigbar ist. Insbesondere im letzten Fall wird man nur die exponierten Stellen der Formoberflächen 5 mit einer kombinierten Sand-/Glaskugelstrahlbehandlung bearbeiten, um das Einbringen und Durchsaugen des Vorformlings 2 in die Kavität 3 eines Saugblasformwerkzeugs zu erleichtern.

Die Massetemperatur des extrudierten Vorformlings (Kunststoffschmelzeschlauchs) beim Einbringen in das Saugblasformwerkzeug liegt vorzugsweise im Bereich von 200 bis 285 °C (angepasst an den Schmelzpunkt und die Viskosität der entsprechenden Kunststoff-Formmassen). Besonders bevorzugt liegt diese Massetemperatur im Bereich von 220 bis 250 °C.

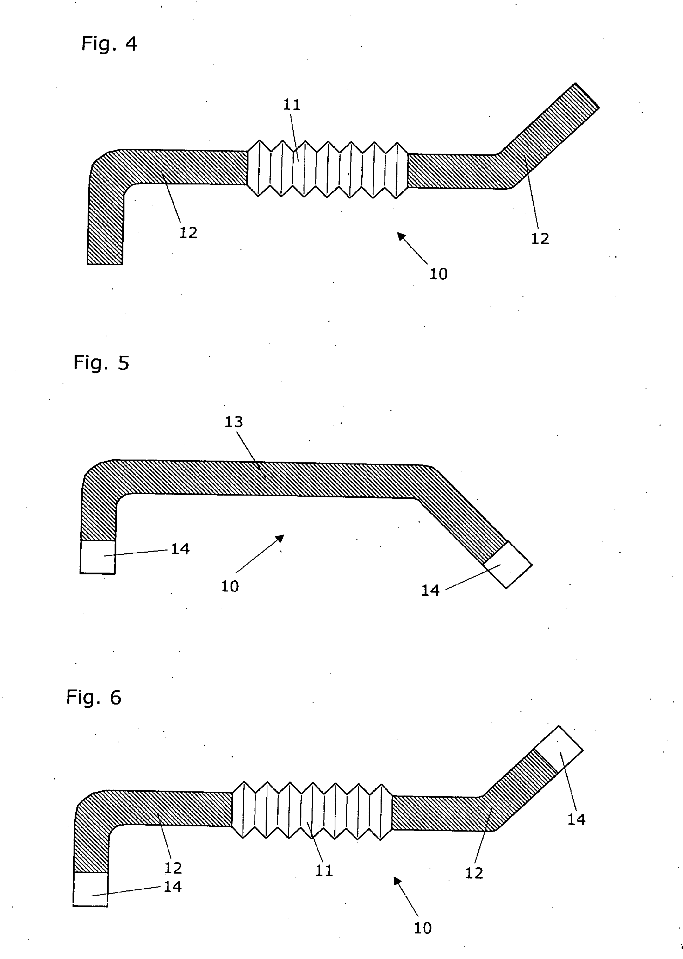

Nachfolgend werden zur Illustration der Verwendungsmöglichkeiten von sequentiell coextrudierten, extrusions-saugblasgeformten Kunststoff-Formteilen in den Figuren 4 bis 6 noch gewisse Ausführungsformen schematisch gezeigt, die zum Teil entnommen sind aus "Trends in der Blasform-Technologie", Fachtagung des Süddeutschen Kunststoff-Zentrums vom 21. Juni 1994, Vortrag von Herrn Dipl.-Ing. W. Daubenbüchel: Verfahrens- und Maschinentechnik der 3D-Technologie, Seite 78.

Die Figur 4 zeigt eine Ansicht eines Kunststoff-Formteils 10 gemäss einer ersten Ausführungsform. Dieser Formteil entstand aus einem mittels sequentieller Coextrusion hergestellten Vorformling 2 und umfasst einen weichen, flexiblen Balg 11 zwischen den zwei harten, stabilen Endteilen 12, die mit der erfindungsgemässen Oberflächenstrukturierung versehen sind.

Die Figur 5 zeigt eine Ansicht eines Kunststoff-Formteils 10 gemäss einer zweiten Ausführungsform. Dieser Formteil entstand aus einem mittels sequentieller Coextrusion hergestellten Vorformling 2 und umfasst einen harten, stabilen Mittelteil 13 mit einer erfindungsgemässen Oberflächenstrukturierung und an dessen Enden je ein weiches, flexibles Anschlussteil 14.

Die Figur 6 zeigt eine Ansicht eines Kunststoff-Formteils 10 gemäss einer dritten Ausführungsform. Dieses Formteil entstand aus einem mittels sequentieller Coextrusion hergestellten Vorformling 2 und umfasst einen weichen, flexiblen Balg 11, der zwischen zwei harten, stabilen Endteilen 12 angeordnet ist. Diese Endteile 12 weisen eine erfindungsgemässe Oberflächenstrukturierung auf und sind mit weichen, flexiblen Anschlussteilen 14 ausgerüstet.

Bevorzugt verwendet wird für weiche, flexible Teile, wie für den Balg 11 und die Anschlussteile 14, ein elastomermodifiziertes Polyamid, d.h. ein Polyamid-Elastomer. Zudem wird für die harten, stabilen Teile oder Abschnitte, wie die Endteile 12 oder den Mittelteil 13, vorzugsweise eine auf Polyamid basierende Formmasse verwendet. Weist ein Kunststoff-Formteil 10 keine weichen, flexiblen Teile auf (nicht gezeigt), so werden zu deren Herstellung die gleichen Polyamide wie für die stabilen Endteile 12 oder den Mittelteil 13 bevorzugt. Soll aber das ganze Kunststoff-Formteil eine gewisse Flexibilität aufweisen, kann es umgekehrt zur Gänze aus einer Formmasse mit einem Polyamid-Elastomer als Matrix hergestellt werden, zum Beispiel aus Grilon® ELX 40 HNZ (wie schon bei den Versuchen erwähnt).

Wird mit der erfindungsgemässen Saugblasform 1 ein Kunststoff-Formteil 10 hergestellt, das ein mehrdimensional (zwei- oder dreidimensional) geformtes Bauteil für den Automobilbau oder Maschinenbau, insbesondere ein Luftführungsteil für den Motorenraum von Automobilen ist, so verhindert ein Balg 11 (also ein gewelltes Teilstück) beispielsweise das Übertragen von Schwingungen auf andere Bauteile. An den weichen, flexiblen Anschlussteilen 14 können Klemmbriden (nicht gezeigt) angebracht werden, welche der gegenseitigen, dichtenden Befestigung des Kunststoff-Formteils und allfälliger Zu- und Abführleitungen dienen.

Die Erfindung umfasst neben sequentiell coextrudierten und/oder mehrschichtigen Kunststoff-Formteilen selbstverständlich auch Kunststoff-Formteile 10, die aus einem einzigen Material (Formmasse) bestehen, sowie beliebige Kombinationen der offenbarten Ausführungsformen, hergestellt unter Verwendung eines erfindungsgemässen Saugblasformwerkzeugs.

### Bezugszeichenliste:

- 1: Saugblasformwerkzeug
- 2: Vorformling, Kunststoffschmelzeschlauch
- 3: Kavität
- 4: Saugvorrichtung
- 5: Formoberfläche
- 6: oberer Schieber
- 7: unterer Schieber
- 8: Blasdorn
- 9: Werkzeughälften
- 10: Kunststoff-Formteil
- 11: weicher, flexibler Balg
- 12: harte, stabile Endteile
- 13: harter, stabiler Mittelteil
- 14: weiche, flexible Anschlussteile
- 15: Blasnadeln

## Patentansprüche

1. Saugblasformwerkzeug (1) mit einer durch zwei Werkzeughälften (9) gebildeten Kavität (3) zum Herstellen von extrusions-saugblasgeformten Kunststoff-Formteilen (10) mittels dem Saugblasverfahren, bei welchem ein extrudierter, plastisch verformbarerer Vorformling (2) in Form eines Kunststoffschmelzeschlauchs in die geschlossene Kavität (3) hinein und in der Kavität zumindest teilweise auf einer Formoberfläche (5) gleitend in Position gebracht wird, wobei zumindest ein Teil der Formoberfläche (5) der Kavität (3) eine Strukturierung aufweist, **dadurch gekennzeichnet, dass** die Strukturierung der Formoberfläche (5) mehrheitlich durch Sandstrahlen der gefrästen Oberfläche hergestellte Vertiefungen aufweist, wobei diese Strukturierung einen Rₐ-Wert zwischen 0.8 und 6.3 µm und einen R_{z}-Wert im Bereich von 6 bis 40 µm aufweist und eine erniedrigte Gleitreibung zum Vorformling (2) bereitstellt.

2. Saugblasformwerkzeug (1) gemäss Anspruch 1, **dadurch gekennzeichnet, dass** die Strukturierung der Formoberfläche (5) einen Rₐ-Wert von ca. 3 µm und einen R_{z}-Wert im Bereich von 20 µm aufweist.

3. Saugblasformwerkzeug (1) gemäss einem der vorhergehenden Ansprüche, **dadurch gekennzeichnet, dass** es eine Saugvorrichtung (4) zum Einbringen des Vorformlings (2) in die geschlossenen Werkzeughälften (9) umfasst.

4. Saugblasformwerkzeug (1) gemäss einem der vorhergehenden Ansprüche, **dadurch gekennzeichnet, dass** es zwei Schieber (6,7) zum beidseitigen Abschliessen der durch die geschlossenen Werkzeughälften (9) gebildeten Kavität (3) umfasst.

5. Saugblasformwerkzeug (1) gemäss einem der vorhergehenden Ansprüche, **dadurch gekennzeichnet, dass** es temperierbar ausgebildet ist.

6. Saugblasformwerkzeug (1) gemäss einem der vorhergehenden Ansprüche, **dadurch gekennzeichnet, dass** zumindest die Formoberfläche (5) der Kavität (3) aus Aluminium ausgebildet ist.

7. Verfahren zur Herstellung eines Saugblasformwerkzeuges (1) mit einer durch zwei Werkzeughälften (9) gebildeten Kavität (3) zum Herstellen von extrusions-saugblasgeformten Kunststoff-Formteilen (10) mittels dem Saugblasverfahren, bei welchem ein extrudierter, plastisch verformbarerer Vorformling (2) in Form eines Kunststoffschmelzeschlauchs (2) in die geschlossene Kavität (3) hinein und in der Kavität zumindest teilweise auf einer Formoberfläche (5) gleitend in Position gebracht wird, zumindest auf einem Teil der Formoberfläche der Kavität (3) eine Strukturierung erzeugt wird, **dadurch gekennzeichnet, dass** die Strukturierung der Formoberfläche (5) mehrheitlich Vertiefungen aufweist, welche mittels Sandstrahlen einer zuvor gefrästen Oberfläche erzeugt werden, wobei diese Strukturierung einen Rₐ-Wert zwischen 0.8 und 6.3 µm und einen R_{z}-Wert im Bereich von 6 bis 40 µm aufweist und eine erniedrigte Gleitreibung zum Kunststoffschmelzeschlauch (2) bereitstellt.

8. Verfahren gemäss Anspruch 7, **dadurch gekennzeichnet, dass** das Sandstrahlen in zwei Etappen durchgeführt wird, wobei in der ersten Etappe Quarzsand und in der zweiten Etappe Meersand verwendet wird.

9. Verfahren gemäss Anspruch 8, **dadurch gekennzeichnet, dass** der Quarzsand und der Meersand eine Körnigkeit von 0.7 bis 1 mm aufweisen.

10. Verfahren gemäss einem der Ansprüche 7 bis 9, **dadurch gekennzeichnet, dass** anschliessend an das Sandstrahlen ein Kugelstrahlen mit Glasperlen erfolgt.

11. Verfahren gemäss Anspruch 10, **dadurch gekennzeichnet, dass** die Glasperlen einen Durchmesser von 100 bis 1000 µm, bevorzugt ca. 500 µm aufweisen.

12. Verfahren gemäss Anspruch 9 oder 11, **dadurch gekennzeichnet, dass** der Quarzsand und/oder der Meersand und/oder die Glasperlen mit einem Luftdruck von 2-8 bar, bevorzugt 4 bar, während einer Zeit von 0.5-5 Minuten, bevorzugt 2 Minuten, auf die Formoberfläche geblasen werden.

13. Verfahren gemäss einem der Ansprüche 7 bis 12, **dadurch gekennzeichnet, dass** nur besonders exponierte Teile der Formoberfläche (5) der Kavität (3) mit einer Oberflächenstrukturierung versehen werden.

14. Verfahren gemäss einem der Ansprüche 7 bis 12, **dadurch gekennzeichnet, dass** die ganze Formoberfläche (5) der Kavität (3) mit einer Oberflächenstrukturierung versehen wird.

15. Verfahren gemäss einem der Ansprüche 7 bis 12, **dadurch gekennzeichnet, dass** diejenige Formoberflächenteile (5) der Kavität (3) mit einer Oberflächenstrukturierung versehen werden, welche von bestimmten Teilen oder Abschnitten des Vorformlings (2) zu belegen sind.

16. Verwendung eines Saugblasformwerkzeugs (1) gemäss einem der Ansprüche 1 bis 6 bzw. eines gemäss dem Verfahren nach einem der Ansprüche 7 bis 15 hergestellten Saugblasformwerkzeugs (1) zum Herstellen von extrusions-saugblasgeformten Kunststoff-Formteilen (10) mittels dem Saugblasverfahren, bei welchem ein extrudierter, plastisch verformbarerer Vorformling (2) in Form eines Kunststoffschmelzeschlauchs in die durch zwei Werkzeughälften (9) gebildete, geschlossene Kavität (3) hinein und in der Kavität zumindest teilweise auf einer Formoberfläche (5) gleitend in Position gebracht wird, wobei zumindest ein Teil der Formoberfläche (5) der Kavität (3) eine Strukturierung aufweist, **dadurch gekennzeichnet, dass** die Strukturierung der Formoberfläche (5) mehrheitlich durch Sandstrahlen der gefrästen Oberfläche hergestellte Vertiefungen aufweist, wobei diese Strukturierung einen Rₐ-Wert zwischen 0.8 und 6.3 µm und einen R_{z}-Wert im Bereich von 6 bis 40 µm aufweist und eine erniedrigte Gleitreibung zum Vorformling (2) bereitstellt.

17. Verwendung gemäss Anspruch 16, **dadurch gekennzeichnet, dass** der extrudierte Kunststoffschmelzeschlauch (2) beim Einbringen in das Saugblasformwerkzeug (1) eine Massetemperatur im Bereich von 200 bis 285 °C, bevorzugt im Bereich von 220 bis 250 °C, aufweist.

18. Verwendung gemäss Anspruch 16 oder 17, **dadurch gekennzeichnet, dass** das Saugblasformwerkzeug (1) auf eine Temperatur im Bereich von 20 bis 120°C, bevorzugt auf eine Temperatur im Bereich von 60 bis 80°C, temperiert wird.

19. Verwendung gemäss einem der Ansprüche 16 bis 18, **dadurch gekennzeichnet, dass** zumindest Teile der Formoberfläche (5) des Saugblasformwerkzeugs (1) vor dem Einbringen eines Vorformlings (2) mit einem Gleitmittel auf Silikonbasis beschichtet werden.

## Claims

1. A suction blow moulding tool (1), comprising a cavity (3) formed by two tool halves (9) for producing extruded plastic suction blow moulded parts (10) by means of a suction blowing process, in which an extruded, plastically deformable preform (2) is brought in form of a plastic melt hose into the closed cavity (3) and is brought into position in the cavity at least partly sliding on a mould surface (5), with at least a part of the mould surface (5) of the cavity (3) having a structuring, **characterized in that** the structuring of the mould surface (5) comprises depressions produced mainly by sandblasting the milled surface, with said structuring having an Rₐ value of between 0.8 and 6.3 µm and an R_{z} value in the range of 6 to 40 µm, and providing a reduced sliding friction to the preform (2).

2. A suction blow moulding tool (1) according to claim 1, **characterized in that** the structuring of the mould surface (5) has an Rₐ value of approx. 3 µm and an R_{z} value in the range of 20 µm.

3. A suction blow moulding tool (1) according to one of the preceding claims, **characterized in that** it comprises a suction apparatus (4) for introducing the preform (2) into the closed tool halves (9).

4. A suction blow moulding tool (1) according to one of the preceding claims, **characterized in that** it comprises two slides (6, 7) for closing the cavity (3) on both sides, said cavity being formed by the closed tool halves (9).

5. A suction blow moulding tool (1) according to one of the preceding claims, **characterized in that** it is arranged such that it can be tempered.

6. A suction blow moulding tool (1) according to one of the preceding claims, **characterized in that** at least the mould surface (5) of the cavity (3) is made of aluminium.

7. A method for producing a suction blow moulding tool (1), comprising a cavity (3) formed by two tool halves (9) for producing extruded plastic suction blow moulded parts (10) by means of a suction blowing process, in which an extruded, plastically deformable preform (2) is brought in form of a plastic melt hose (2) into the closed cavity (3) and is brought into position in the cavity at least partly sliding on a mould surface (5), with a structuring being produced on at least a part of the mould surface of the cavity (3), **characterized in that** the structuring of the mould surface (5) predominantly comprises depressions which are produced by sandblasting of a previously milled surface, with said structuring having an Rₐ value of between 0.8 and 6.3 µm and an R_{z} value in the range of 6 to 40 µm, and providing a reduced sliding friction to the plastic melt hose(2).

8. A method according to claim 7, **characterized in that** the sandblasting is performed in two stages, with quartz sand being used in the first stage and marine sand being used in the second stage.

9. A method according to claim 8, **characterized in that** the quartz sand and the marine sand have a granularity of 0.7 to 1 mm.

10. A method according to one of the claims 7 to 9, **characterized in that** shot-blasting with glass beads occurs directly after sandblasting.

11. A method according to claim 10, **characterized in that** the glass beads have a diameter of 100 to 1000 µm, preferably approx. 500 µm.

12. A method according to claim 9 or 11, **characterized in that** the quartz sand and/or the marine sand and/or the glass beads are blown against the mould surface with an air pressure of 2 to 8 bar, preferably 4 bar, over a period of 0.5 to 5 minutes, preferably 2 minutes.

13. A method according to one of the claims 7 to 12, **characterized in that** only especially exposed parts of the mould surface (5) of the cavity (3) are provided with a surface structuring.

14. A method according to one of the claims 7 to 12, **characterized in that** the entire mould surface (5) of the cavity (3) is provided with a surface structuring.

15. A method according to one of the claims 7 to 12, **characterized in that** such mould surface parts (5) of the cavity (3) are provided with a surface structuring which need to be covered by specific parts or sections of the preform (2).

16. A use of a suction blow moulding tool (1) according to one of the claims 1 to 6 or of a suction blow moulding tool (1) produced according to the method according to one of the claims 7 to 15 for the production of extruded plastic suction blow moulded parts (10) by means of the suction blowing process, in which an extruded, plastically deformable preform (2) is brought in form of a plastic melt hose into the closed cavity (3) formed by two tool halves (9) and is brought into position in the cavity at least partly sliding on a mould surface (5), with at least a part of the mould surface (5) of the cavity (3) comprising a structuring, **characterized in that** the structuring of the mould surface (5) comprises depressions produced mainly by sandblasting the milled surface, with said structuring having an Rₐ value of between 0.8 and 6.3 µm and an R_{z} value in the range of 6 to 40 µm, and providing a reduced sliding friction to the preform (2).

17. A use according to claim 16, **characterized in that** during the introduction into the suction blow moulding tool (1) the extruded plastic melt hose (2) has a melt temperature in the range of 200 to 285°C, preferably in the range of 220 to 250°C.

18. A use according to claim 16 or 17, **characterized in that** the suction blow moulding tool (1) is tempered to a temperature in the range of 20 to 120°C, preferably to a temperature in the range of 60 to 80°C.

19. A use according to one of the claims 16 to 18, **characterized in that** at least parts of the mould surface (5) of the suction blow moulding tool (1) are coated with a sliding agent on the basis of silicone prior to the introduction of a preform (2).

## Revendications

1. Outil de formage par aspiration et soufflage (1) comprenant une cavité (3) formée par deux moitiés d'outil (9), destiné à la fabrication de pièces moulées en plastique (10) formées par extrusion-aspiration-soufflage à l'aide du procédé d'aspiration-soufflage, dans lequel une ébauche (2) extrudée plastiquement déformable est amenée dans la cavité fermée (3) sous forme d'un tuyau de plastique en fusion et est amenée en position dans la cavité au moins en partie par glissement sur une surface de formage (5), au moins une partie de la surface de formage (5) de la cavité (3) présentant une structure, **caractérisé en ce que** la structure de la surface de formage (5) présente des évidements réalisés en majorité par un décapage au sable de la structure fraisée, cette structure présentant une valeur Rₐ comprise entre 0,8 et 6,3 µm et une valeur R_{z} comprise entre 6 et 40 µm et préparant une friction de glissement abaissée par rapport à l'ébauche (2).

2. Outil de formage par aspiration et soufflage (1) selon la revendication 1, **caractérisé en ce que** la structure de la surface de formage (5) présente une valeur Rₐ d'environ 3 µm et une valeur R_{z} de l'ordre de 20 µm.

3. Outil de formage par aspiration et soufflage (1) selon l'une des revendications précédentes, **caractérisé en ce qu'**il comprend un dispositif d'aspiration (4) pour amener l'ébauche (2) dans les moitiés d'outil (9) fermées.

4. Outil de formage par aspiration et soufflage (1) selon l'une des revendications précédentes, **caractérisé en ce qu'**il comprend deux coulisseaux (6, 7) pour fermer de chaque côté la cavité (3) formée par les moitiés d'outil (9) fermées.

5. Outil de formage par aspiration et soufflage (1) selon l'une des revendications précédentes, **caractérisé en ce qu'**il est réalisé tempérable.

6. Outil de formage par aspiration et soufflage (1) selon l'une des revendications précédentes, **caractérisé en ce qu'**au moins la surface de formage (5) de la cavité (3) est réalisée en aluminium.

7. Procédé pour fabriquer un outil de formage par aspiration et soufflage (1) comprenant une cavité (3) formée par deux moitiés d'outil (9) destiné à la fabrication de pièces moulées en plastique (10) formées par extrusion-aspiration-soufflage à l'aide du procédé d'aspiration-soufflage, dans lequel une ébauche (2) extrudée plastiquement déformable est amenée dans la cavité fermée (3) sous forme d'un tuyau de plastique en fusion et est amenée en position dans la cavité au moins en partie par glissement sur une surface de formage (5), une structure étant produite sur au moins une partie de la surface de formage de la cavité (3), **caractérisé en ce que** la structure de la surface de formage (5) présente des évidements réalisés en majorité par un décapage au sable d'une surface préalablement fraisée, cette structure présentant une valeur Rₐ comprise entre 0,8 et 6,3 µm et une valeur R_{z} comprise entre 6 et 40 µm et préparant une friction de glissement abaissée par rapport au tuyau de plastique en fusion (2).

8. Procédé selon la revendication 7, **caractérisé en ce que** le décapage au sable est réalisé en deux étapes, du sable de quartz étant utilisé au cours de la première étape et du sable de mer étant utilisé dans la deuxième étape.

9. Procédé selon la revendication 8, **caractérisé en ce que** le sable de quartz et le sable de mer présentent une granularité comprise entre 0,7 et 1 mm.

10. Procédé selon l'une des revendications 7 à 9, **caractérisé en ce que** le décapage au sable est suivi d'un grenaillage avec des billes de verre.

11. Procédé selon la revendication 10, **caractérisé en ce que** les billes de verre présentent un diamètre compris entre 100 et 1000 µm, de préférence d'environ 500 µm.

12. Procédé selon la revendication 9 ou 11, **caractérisé en ce que** le sable de quartz et/ou le sable de mer et/ou les billes de verre sont soufflés sur la surface de formage avec une pression d'air comprise entre 2 et 8 bar, de préférence 4 bar, pendant une durée comprise entre 0,5 et 5 minutes, de préférence 2 minutes.

13. Procédé selon l'une des revendications 7 à 12, **caractérisé en ce que** seules des parties particulièrement exposées de la surface de formage (5) de la cavité (3) sont munies d'une structure de surface.

14. Procédé selon l'une des revendications 7 à 12, **caractérisé en ce que** toute la surface de formage (5) de la cavité (3) est munie d'une structure de surface.

15. Procédé selon l'une des revendications 7 à 12, **caractérisé en ce que** celles parties de surface de formage (5) de la cavité (3) sont munies d'une structure de surface, qui doivent être recouvertes par certaines parties ou par des segments de l'ébauche (2).

16. Utilisation d'un outil de formage par aspiration et soufflage (1) selon l'une des revendications 1 à 6 ou d'un outil de formage par aspiration et soufflage (1) fabriqué suivant le procédé selon l'une des revendications 7 à 15 destiné à la fabrication de pièces moulées en plastique (10) formées par extrusion-aspiration-soufflage à l'aide du procédé d'aspiration-soufflage, dans lequel une ébauche (2) extrudée plastiquement déformable est amenée dans la cavité (3) fermée formée par deux moitiés d'outil (9), sous forme d'un tuyau de plastique en fusion et est amenée en position dans la cavité au moins en partie par glissement sur une surface de formage (5), au moins une partie de la surface de formage (5) de la cavité (3) présentant une structure, **caractérisé en ce que** la structure de la surface de formage (5) présente des évidements fabriqués en majorité par un décapage au sable de la surface fraisée, cette structure présentant une valeur Rₐ comprise entre 0,8 et 6,3 µm et une valeur R_{z} comprise entre 6 et 40 µm et préparant une friction de glissement abaissée par rapport à l'ébauche (2).

17. Utilisation selon la revendication 16, **caractérisée en ce que** le tuyau de plastique en fusion extrudé (2), lors de son introduction dans l'outil de formage par aspiration et soufflage (1), présente une température de masse comprise entre 200 et 285 °C, de préférence entre 220 et 250 °C.

18. Utilisation selon la revendication 16 ou 17, **caractérisée en ce que** l'outil de formage par aspiration et soufflage (1) est tempéré à une température comprise entre 20 et 120°C, de préférence à une température comprise entre 60 et 80 °C.

19. Utilisation selon l'une des revendications 16 à 18, **caractérisée en ce qu'**au moins des parties de la surface de formage (5) de l'outil de formage par aspiration et soufflage (1) sont recouvertes, avant l'introduction d'une ébauche (2), d'un agent glissant sur une base silicone.
